(19) **Europäisches Patentamt**
**European Patent Office**
**Office européen des brevets**

(11) **EP 4 421 591 B1**

(12) **EUROPEAN PATENT SPECIFICATION**

(45) Date of publication and mention
of the grant of the patent:
**03.06.2026 Bulletin 2026/23**

(21) Application number: **21962184.4**

(22) Date of filing: **07.12.2021**

(51) International Patent Classification (IPC):
**B25J 9/16** (2006.01)   **G06N 3/045** (2023.01)
**G06N 3/0464** (2023.01)   **G06N 3/08** (2023.01)
**G06V 10/82** (2022.01)   **G06V 20/40** (2022.01)
**G06V 40/10** (2022.01)   **G06V 20/56** (2022.01)
**G06F 3/01** (2006.01)

(52) Cooperative Patent Classification (CPC):
**G06N 3/045; B25J 9/16; G06F 3/01; G06N 3/0464;**
**G06N 3/08; G06V 10/82; G06V 20/40; G06V 20/56;**
**G06V 40/10**

(86) International application number:
**PCT/CN2021/136031**

(87) International publication number:
**WO 2023/070841 (04.05.2023 Gazette 2023/18)**

(54) **ROBOT CONTROL METHOD AND APPARATUS, AND STORAGE MEDIUM**

ROBOTERSTEUERUNGSVERFAHREN UND -VORRICHTUNG SOWIE SPEICHERMEDIUM

PROCÉDÉ ET APPAREIL DE COMMANDE DE ROBOT ET SUPPORT D'ENREGISTREMENT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **26.10.2021 CN 202111248999**

(43) Date of publication of application:
**28.08.2024 Bulletin 2024/35**

(73) Proprietor: **Midea Robozone Technology Co., Ltd.**
**Suzhou, Jiangsu 215000 (CN)**

(72) Inventors:
• **ZHANG, Zhipeng**
  **Suzhou, Jiangsu 215000 (CN)**
• **JU, Wenqi**
  **Suzhou, Jiangsu 215000 (CN)**
• **XU, Quanfei**
  **Suzhou, Jiangsu 215000 (CN)**
• **SUN, Tao**
  **Suzhou, Jiangsu 215000 (CN)**

(74) Representative: **RGTH**
**Patentanwälte PartGmbB**
**Mönckebergstraße 11**
**20095 Hamburg (DE)**

(56) References cited:
**WO-A1-2015/096806      WO-A1-2021/143543**
**CN-A- 110 765 967      CN-A- 111 462 192**
**CN-A- 111 754 303      CN-A- 112 379 781**
**CN-A- 112 379 781      CN-A- 112 800 894**
**US-A1- 2018 213 994**

• **AN SHAN ET AL: "ARShoe Real-Time**
**Augmented Reality Shoe Try-on System on**
**Smartphones", PROCEEDINGS OF THE 45TH**
**INTERNATIONAL ACM SIGIR CONFERENCE ON**
**RESEARCH AND DEVELOPMENT IN**
**INFORMATION RETRIEVAL, ACMPUB27, NEW**
**YORK, NY, USA, 17 October 2021 (2021-10-17),**
**pages 1111 - 1119, XP059240119, ISBN:**
**978-1-4503-8732-3, DOI: 10.1145/**
**3474085.3481537**

## Description

### FIELD

The present disclosure relates to the field of robot technologies, and more particularly, to a method, an apparatus, and storage medium for robot control.

### BACKGROUND

With the development of science and technology, more and more robots are used in people's daily lives, such as common sweeping robots and mopping robots and more advanced robot housekeepers. Applications of these robots in the household make people's lives more comfortable and convenient. Machine vision as an aid can help robots obtain information about scenes within fields of view of the robots.

At present, control of operations of a robot is mainly based on an application on a mobile phone or buttons on a machine body of the robot.

However, the usage of the application on the mobile phone relies heavily on the mobile phone and a network that is used to transmit control instructions. Thus, the usage of the application is inconvenient and not fast enough. In addition, the buttons on the machine body of the robot have limited functions. Therefore, conventional robot control approaches based on the application on the mobile phone or the buttons on the machine body of the robot are relatively complicated and cumbersome, resulting in poor user experience. CN 112 379 781 A discloses a human-computer interaction method for foot information recognition, direct interaction between a user and a machine is achieved by recognizing foot postures in collected images. AN SHAN et al (AN SHAN ET AL: "ARShoe Real-Time Augmented Reality Shoe Try-on system on smartphones", PROCEEDINGS OF THE 45TH INTERNATIONAL ACM SIGIR CONFERENCE ON RESEARCH AND DEVELOPMENT IN INFORMATION RETRIEVAL, ACMPUB27, NEW YORK, NY, USA, 17. October 2021 (2021-10-17), pages 1111-1119, XP059240119) discloses a real-time augmented reality virtual shoe try-on system for smartphones. US 2018/213994 A1 discloses a cleaner comprising an image sensor that obtains image information about a portion of the region, and a processor that extracts a foot sole region of a person in the region based on the obtained image information, identifies a moving point based on the extracted foot sole region of the person, and controls the motor to move the cleaner body to the moving point. WO 2021/143543 A1 discloses a cleaning robot that can acquire posture data of a user in response to a posture interaction wakeup instruction. It then determines a target operation region according to the posture data of the user, and moves to the target operation region to execute a set operation task.

## SUMMARY

An object of the present disclosure is to provide a robot control method and apparatus, and a storage medium to overcome the above-mentioned defects in the related art. The invention is set out in the appended claims.

In a first aspect of the present invention, a robot control method is provided. The method comprises: obtaining a first scene image of a robot, and detecting whether the first scene image comprises a foot by a trained first neural network model; obtaining multiple frames of second scene image of the robot consecutively in response to detecting the foot in a predetermined quantity of consecutive frames of first scene image; and recognizing a foot posture based on the multiple frames of second scene image, and controlling the robot based on a control manner corresponding to the recognized foot posture.

In some embodiments of the present disclosure, the detecting whether the first scene image comprises the foot by the trained first neural network model comprises: inputting the first scene image into a trained first neural network model, the first neural network model being configured to detect whether the first scene image comprises the foot, and output a detection result.

In some embodiments of the present disclosure, the method further comprises a training process of the first neural network model, the training process comprising: obtaining an image, captured by the camera, containing the foot as a positive sample, and obtaining an image, captured by the camera, without the foot as a negative sample; and obtaining the first neural network model by training a pre-established classification model using the positive sample and the negative sample.

According to the present invention, the recognizing the foot posture based on the multiple frames of second scene image comprises: inputting the multiple frames of second scene image that are obtained consecutively into a trained second neural network model, and recognizing the foot posture by the second neural network model based on the multiple frames of second scene image.

According to the present invention, the recognizing the foot posture by the second neural network model based on the multiple frames of second scene image comprises: obtaining multiple frames of feature maps by performing, using a feature extraction module in the second neural network model, a feature extraction sequentially on the multiple frames of second scene image; obtaining, by a temporal shift module in the second neural network model, the multiple frames of feature maps from the feature extraction module, and obtaining multiple frames of shifted feature maps by performing, using the temporal shift module in the second neural network model, a temporal shift on each of the multiple frames of feature maps; and obtaining, by a recognition module in the second neural network model, the multiple frames of shifted feature maps from the temporal shift module, obtaining, by the recognition module in the second neural network model, the multiple frames of feature maps from the feature extraction module, and recognizing, by the recognition module in the second neural network model, the foot posture based on the multiple frames of shifted feature maps and the multiple frames of feature maps.

In some embodiments of the present disclosure, the obtaining the multiple frames of shifted feature maps by performing, using the temporal shift module in the second neural network model, the temporal shift on each of the multiple frames of feature maps comprises: for each of frames of feature maps ranging from a first frame of feature map to a penultimate frame of feature map in the multiple frames of feature maps, shifting features of part of channels in the feature map to corresponding channels of a successively subsequent frame of feature map to obtain the multiple frames of shifted feature maps.

In some embodiments of the present disclosure, the recognizing, by the recognition module in the second neural network model, the foot posture based on the multiple frames of shifted feature maps and the multiple frames of feature maps comprises: performing, by a convolutional layer in the recognition module, a convolution operation on each of the multiple frames of shifted feature maps; obtaining, by a merging layer in the recognition module, each of multiple frames of convolved feature maps from the convolutional layer, and obtaining multiple frames of merged feature maps by merging, by the merging layer in the recognition module, each of the multiple frames of convolved feature maps with a corresponding one of the multiple frames of feature maps; and obtaining, by a fully connected layer in the recognition module, the multiple frames of merged feature maps from the merging layer, and obtaining, by the fully connected layer in the recognition module, a foot posture recognition result based on the multiple frames of merged feature maps.

In some embodiments of the present disclosure, the obtaining the multiple frames of feature maps by performing, using the feature extraction module in the second neural network model, the feature extraction sequentially on the multiple frames of second scene image comprises obtaining the multiple frames of feature maps by performing, using a convolutional module with an attention enhancement mechanism in the feature extraction module, the feature extraction sequentially on the multiple frames of second scene image.

In some embodiments of the present disclosure, the convolutional module with the attention enhancement mechanism comprises an attention module arranged between at least one pair of adjacent convolutional layers. The attention module comprises a channel attention module, a first fusion layer, a spatial attention module, and a second fusion layer. The method further comprises: obtaining, by the channel attention module, a channel weight based on a feature map outputted by a previous convolutional layer; obtaining a first fusion feature map by fusing, by the first fusion layer, the channel weight to the feature map outputted by the previous convolutional layer; obtaining, by the spatial attention module, a spatial position weight based on the first fusion feature map outputted by the first fusion layer; and obtaining a second fusion feature map by fusing, by the second fusion layer, the spatial position weight to the first fusion feature map, and inputting, by the second fusion layer, the second fusion feature map to a next convolutional layer.

According to the present invention, the method further comprises a training process of the second neural network model, the training process comprising: obtaining multiple video segments each containing the foot that are captured by the camera, and labeling a predetermined foot posture contained in each of the multiple video segments; and obtaining the second neural network model by training a pre-established action recognition model using multiple labeled video segments.

In some embodiments of the present disclosure, subsequent to the obtaining the second neural network model, the method further comprises: performing an integer quantization on at least one model parameter of the second neural network model.

In some embodiments of the present disclosure, the controlling the robot based on the control manner corresponding to the recognized foot posture comprises: controlling, based on the recognized foot posture being a first predetermined posture, the robot to initiate a cleaning mode to start cleaning; controlling, based on the recognized foot posture being a second predetermined posture, the robot to stop cleaning; controlling, based on the recognized foot posture being a third predetermined posture, the robot to access a target-tracking mode; and controlling, based on the recognized foot posture being a fourth predetermined posture, the robot to perform cleaning in a predetermined range around a position of the foot.

In a second aspect of the present disclosure, a robot control apparatus is provided. The apparatus comprises a memory, a processor, and a computer program stored on the memory and executable on the processor. The processor is configured to implement, when executing the computer program, the steps of the method in the above-mentioned first aspect.

In a third aspect of the present disclosure, a robot is provided. The robot comprises: the robot control apparatus in the above-mentioned second aspect; and a camera configured to capture a scene image of the robot.

In a fourth aspect of the present disclosure, a computer-readable storage medium is provided. The computer-readable storage medium has a computer program stored thereon. The program, when executed by a processor, implements the steps of the method in the above-mentioned first aspect.

Based on the robot control method, the robot control apparatus, and the storage medium in the above-mentioned first aspect to the above-mentioned fourth aspect, technical solutions of the present disclosure provide the following advantageous effects or advantages.

In a scene image captured by the camera mounted at the robot, when the foot is captured within a field of view of the robot, a specific foot posture is recognized using a video captured by the camera. Therefore, intelligent control of the robot is realized based on the recognized foot posture. Compared with a conventional control method based on an application on a mobile phone or pressing buttons on a machine body of the robot, the method provided in this disclosure is more convenient, efficient, and intelligent, which can greatly improve user experience. In addition, since the intelligent control can be realized using an existing camera of the robot, intelligent control of a product can be realized without additional costs, which further improves the user experience.

**BRIEF DESCRIPTION OF THE DRAWINGS**

Various other advantages and benefits will become apparent to those skilled in the art through reading the detailed description of preferred embodiments below. The accompanying drawings are merely used for the purpose of illustrating the preferred embodiments, and should not be construed as a limitation on the present disclosure. Moreover, the same components are indicated by the same reference signs throughout the accompanying drawings.

FIG. 1 is a schematic structural view of a robot illustrated in the present disclosure.

FIG. 2 is a schematic flowchart illustrating a robot control method according to an exemplary embodiment of the present disclosure.

FIG. 3 is a schematic flowchart illustrating a foot posture recognition performed by a second neural network model according to the embodiment illustrated in FIG. 2 of the present disclosure.

FIG. 4 is a schematic structural diagram of a second neural network model according to the embodiment illustrated in FIG. 3 of the present disclosure.

FIG. 5 is a schematic structural diagram of an attention module in a feature extraction module according to the embodiment illustrated in FIG. 3 of the present disclosure.

FIG. 6 is a schematic diagram illustrating a shift principle of a temporal shift module according to the embodiment illustrated in FIG. 3 of the present disclosure.

FIG. 7 is a schematic structural diagram of a recognition module according to the embodiment illustrated in FIG. 3 of the present disclosure.

FIG. 8 is a specific flowchart illustrating a robot control method according to an exemplary embodiment of the present disclosure.

FIG. 9 is a schematic structural diagram of a robot control apparatus according to an exemplary embodiment of the present disclosure.

FIG. 10 is a schematic structural diagram of a storage medium according to an exemplary embodiment of the present disclosure.

Realization of the object, functional features, and advantages of the present disclosure will be further described with reference to the accompanying drawings and in conjunction with the embodiments.

**DETAILED DESCRIPTION OF THE EMBODIMENTS**

Technical solutions according to embodiments of the present disclosure will be described clearly and completely below in combination with accompanying drawings of the embodiments of the present disclosure. Apparently, the embodiments described below are only a part of the embodiments of the present disclosure, rather than all embodiments of the present disclosure. On a basis of the embodiments of the present disclosure, all other embodiments obtained by those skilled in the art without creative labor shall fall within the protection scope of the present disclosure.

It should be noted that all directional indications (such as up, down, left, right, front, rear, etc.) in the embodiments of the present disclosure are only used to explain relative positions between various components, movements of various components, or the like under a predetermined posture (as illustrated in the figures). When the predetermined posture changes, the directional indications also change accordingly.

In addition, in the present disclosure, descriptions associated with "first", "second", or the like are only used for descriptive purposes, and cannot be understood as indicating or implying relative importance or implicitly indicating the number of indicated technical features. Therefore, the features associated with "first" and "second" may explicitly or implicitly comprise at least one of the features. In the description of the present disclosure, "plurality" means at least two, unless otherwise specifically defined.

In the present disclosure, unless otherwise clearly stipulated and limited, terms such as "connect", "fix", or the like should be understood in a broad sense. For example, "fix" may mean a fixed connection or a detachable connection or connection as one piece; mechanical connection or electrical connection; direct connection or indirect connection through an intermediate; or internal communication of two components or the interaction relationship between two components, unless otherwise clearly limited. For those skilled in the art, specific meanings of the above-mentioned terms in the present disclosure can be understood according to specific circumstances.

To solve a current problem of inconvenience caused by controlling a robot using an application on a mobile phone or buttons on a machine body of the robot, an improved robot control method is provided according to the present disclosure. In particular, a first scene image captured by a camera of a robot is obtained. Whether the first scene image comprises a foot is detected. Multiple frames of second scene image captured by the camera are obtained consecutively in response to detecting the foot in a predetermined quantity of consecutive frames of first scene image. Therefore, a foot posture is recognized based on the multiple frames of second scene image. The robot is controlled based on a control manner corresponding to the recognized foot posture.

The following technical effects can be achieved based on the above description.

In a scene image captured by the camera mounted at the robot, when the foot is captured within a field of view of the robot, a specific foot posture is recognized using a video captured by the camera. Therefore, intelligent control of the robot is realized based on the recognized foot posture. Compared with a conventional control method based on an application on a mobile phone or pressing buttons on a machine body of the robot, the method provided in this disclosure is more convenient, efficient, and intelligent, which can greatly improve user experience. In addition, since the intelligent control can be realized using an existing camera of the robot, intelligent control of a product can be realized without additional costs, which further improves the user experience.

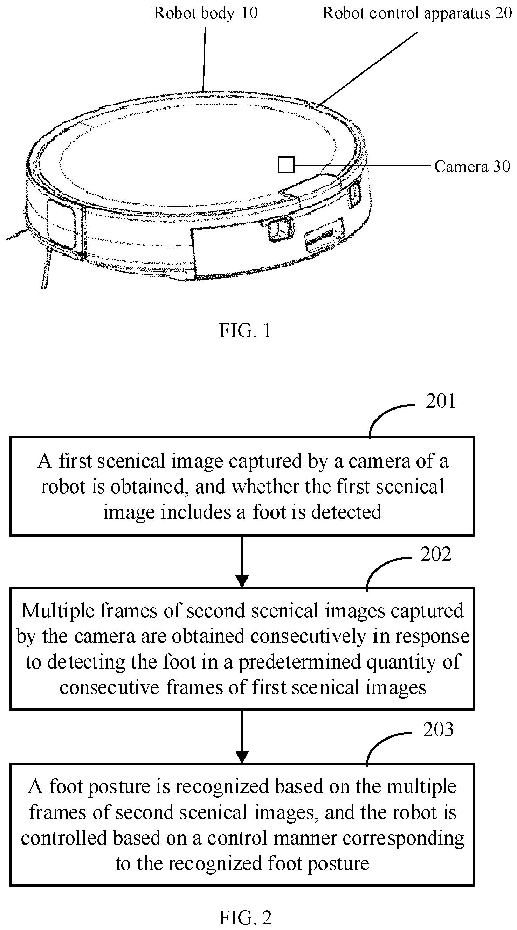

As illustrated in a schematic structural view of a robot in FIG. 1, the robot comprises a robot body 10, a robot control apparatus 20, and a camera 30.

In particular, the robot body 10 is configured to move and is electrically connected to the robot control apparatus 20. The camera 30 is arranged at a side of the robot body 10 facing away from the ground. That is, the camera 30 is arranged directly in front of the robot. During a movement of the robot, the camera 30 may be controlled to take pictures of scenes in front of the robot to realize obstacle avoidance and path planning.

Optionally, the robot control apparatus 20 may be independent of the robot body 10 or, of course, may be integrated within the robot body 10. The present disclosure is not limited in this regard.

It should be noted that the robot body 10 is provided with structures such as a movement module, a control module, and various sensors, to realize environmental map construction and path planning for the robot.

Based on the above functional description of the respective structures, a control principle of the robot control device 20 is as follows. The first scene image captured by the camera of the robot is obtained. Whether the first scene image comprises the foot is detected. The multiple frames of second scene image captured by the camera are obtained consecutively in response to detecting the foot in the predetermined quantity of consecutive frames of first scene image. Therefore, the foot posture is recognized based on the multiple frames of second scene image. The robot is controlled based on the control manner corresponding to the recognized foot posture.

To enable those skilled in the art to better understand the solutions of the present disclosure, technical solutions according to the embodiments of the present disclosure will be described clearly and completely below in combination with accompanying drawings of the embodiments of the present disclosure.

First Embodiment

FIG. 2 is a schematic flowchart illustrating a robot control method according to an exemplary embodiment of the present disclosure. The robot to which the robot control method is applicable comprises the camera 30 as illustrated in FIG. 1. As an example, the robot is described below as a sweeping robot. As illustrated in FIG. 2, the robot control method comprises the following operations at blocks 201 to 203.

At block 201, a first scene image captured by a camera of a robot is obtained, and whether the first scene image comprises a foot is detected.

Whether the robot is in a movement state or a stopped state, scene image of the scene around the robot are captured in real time by the camera mounted at the robot. When a person accesses a field of view of the camera, only a foot of the person can be captured by the camera due to a limited height of the robot.

In an optional specific embodiment, for a process of detecting whether the first scene image comprises the foot, the first scene image may be inputted into a trained first neural network model, the first neural network model being configured to detect whether the first scene image comprises the foot, and output a detection result. Detecting whether the foot appears within the field of view using the neural network is simple and accurate.

Since the first neural network model only needs to determine whether a human foot appears in the image, a simple binary classification model may be adopted as the first neural network model.

Optionally, due to limited computing power of the robot itself, the binary classification model may be constructed using a deep convolutional network plus a small quantity of fully connected layers.

In this embodiment, the first neural network model needs to be pre-trained before being applied. A training process of the first neural network model comprises: obtaining a image, captured by the camera, containing the foot as a positive sample, and obtaining a image, captured by the camera, without the foot as a negative sample; and obtaining the first neural network model by training a pre-established classification model using the positive sample and the negative sample.

During capturing of positive and negative samples, different persons wearing different shoes may make some predetermined postures with their feet within the field of view of the camera of the robot, which is captured by the camera into a video. Image containing the feet are taken from the video as positive samples, while image containing no feet are taken from the video as negative samples.

At block 202, multiple frames of second scene image captured by the camera are obtained consecutively in response to detecting the foot in a predetermined quantity of consecutive frames of first scene image.

By limiting that the foot posture is recognized subsequent to a detection of the foot in multiple consecutive frames of first scene image, a false detection or a user's unintentional entrance into the field of view of the camera can be avoided.

Further, since it takes a few seconds for a person to complete some specific foot postures, multiple consecutive frames of image need to be obtained for recognition of some specific foot postures.

It is conceivable for those skilled in the art that the above-mentioned "first scene image" and "second scene image" both belong to the scene image captured by the camera, except that the first scene image is captured earlier than the second scene image. That is, a specific foot posture recognition is performed only when the human foot is detected by the robot within the field of view of the camera.

At block 203, a foot posture is recognized based on the multiple frames of second scene image, and the robot is controlled based on a control manner corresponding to the recognized foot posture.

In an optional specific embodiment, for a recognition process of the foot posture, the multiple frames of second scene image that are obtained consecutively may be inputted into a trained second neural network model, and recognizing the foot posture by the second neural network model based on the multiple frames of second scene image.

For a specific process of recognizing the foot posture by the second neural network model, reference can be made to relevant description in the following embodiments, which will not be described in detail herein.

The second neural network model belongs to an action recognition model. The second neural network model needs to be pre-trained before being applied. The training process of the second neural network model comprises: obtaining multiple video segments each containing the foot that are captured by the camera, and labeling a predetermined foot posture contained in each of the multiple video segments; and obtaining the second neural network model by training a pre-established action recognition model using multiple labeled video segments.

Optionally, during collection of training data, different persons wearing different shoes may make some predetermined postures with their feet within the field of view of the camera of the robot, which is captured by the camera into a video. Each video is labeled with a foot posture label.

Types of valid foot postures that can be recognized by the second neural network model may be set as desired. Assuming that the robot has four control functions, data sets containing four foot postures are collected to train the action recognition model during training of the second neural network model. Foot postures other than the four foot postures are recognized as invalid foot postures by the second neural network model.

In an optional specific embodiment, when four valid foot postures can be recognized by the second neural network model, for a process of controlling the robot based on the control manner corresponding to the recognized foot posture, the robot is controlled to initiate a cleaning mode to start cleaning, when the recognized foot posture is a first predetermined posture. When the recognized foot posture is a second predetermined posture, the robot is controlled to stop cleaning. When the recognized foot posture is a third predetermined posture, the robot is controlled to access a target-tracking mode, to enable the robot to track the user's foot and reach a specific position. When the recognized foot posture is a fourth predetermined posture, the robot is controlled to perform intensive cleaning in a predetermined range around a position of the foot.

It is conceivable for those skilled in the art that the above four control functions are only exemplary illustrations. The present disclosure comprises, but is not limited to, the four functions such as start cleaning, stop cleaning, target tracking, and intensive cleaning.

It should be noted that since model parameters contained in each layer of the trained second neural network model are all of floating-point types but the robot has limited computing power, a problem of an extremely low operation efficiency occurs if the robot is equipped with a floating-point format model. To eliminate an effect on the operation efficiency of the robot, in the present disclosure, an integer quantization may be further performed on at least one model parameter of the second neural network model, subsequent to obtaining the second neural network model. Therefore, deploying the second neural network model, obtained after performing the integer quantization, to the robot can occupy less resources, realizing an efficient and stable recognition.

Optionally, a calculation formula for the integer quantization is as follows:

$$Q = R/S + Z,$$

where Q represents a quantized integer parameter, R represents a parameter of floating-point type in the model, S=(Rmax-Rmin)/(Qmax-Qmin), which is a quantization scale, and Z=Qmax-Rmax/S, which is a zero point of quantization.

Based on the above-mentioned step 201 to step 203, in a preferred embodiment, to minimize a resource occupation of the robot and ease an energy consumption burden, the complex second neural network model remains dormant, while only the simple first neural network model is run to detect whether the first scene image comprises the foot. When the foot is detected in the multiple consecutive frames of first scene image, the second neural network model is woken up, to recognize the foot posture based on the multiple frames of second scene image that are further captured.

Further, when no valid foot posture is recognized by the second neural network model for a sustained period of time, the second neural network model is controlled to re-access a dormant state, and the first neural network model is activated.

Therefore, a control flow illustrated in FIG. 2 is completed. In the scene image captured by the camera mounted at the robot, when the foot is captured within the field of view of the robot, the specific foot posture is recognized using the video captured by the camera. Therefore, the intelligent control of the robot is realized based on the recognized foot posture. Compared with the conventional control method based on the application on the mobile phone or pressing the buttons on the machine body of the robot, the method provided in this disclosure is more convenient, efficient, and intelligent, which can greatly improve the user experience. In addition, since the intelligent control can be realized using the existing camera of the robot, the intelligent control of the product can be realized without additional costs, which further improves the user experience.

Second Embodiment

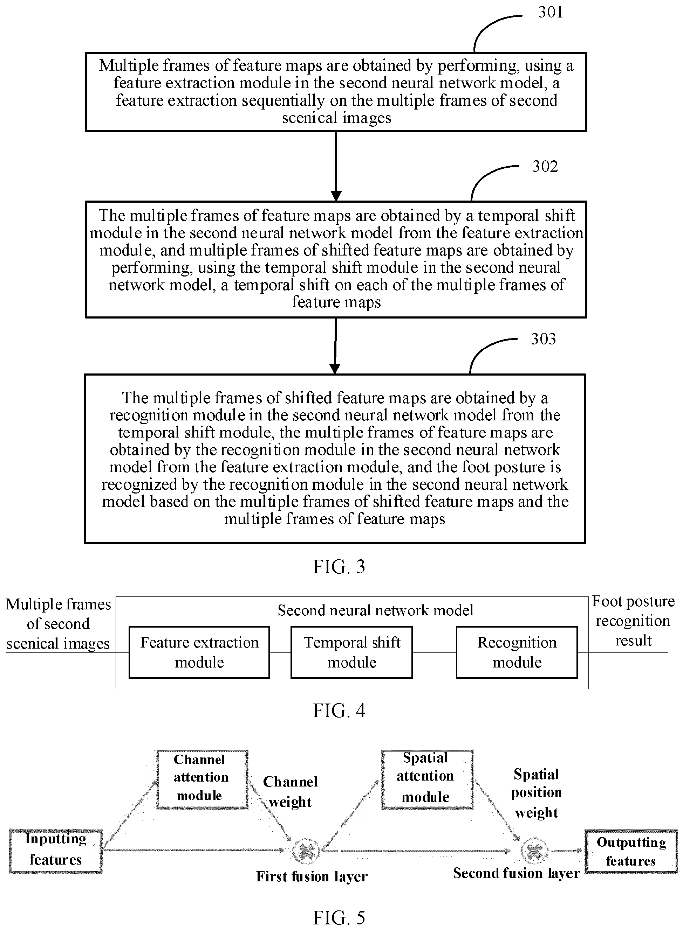

FIG. 3 is a schematic flowchart illustrating a foot posture recognition performed by the second neural network model according to the embodiment illustrated in FIG. 2 of the present disclosure. Based on the above-mentioned embodiment illustrated in FIG. 2 and in conjunction with a structure of the second neural network model illustrated in FIG. 4, a process of the foot posture recognition performed by the second neural network model comprises the following operations at block.

At block 301, multiple frames of feature maps are obtained by performing, using a feature extraction module in the second neural network model, a feature extraction sequentially on the multiple frames of second scene image.

In an optional specific embodiment, the multiple frames of feature maps are obtained by performing, using a convolutional module with an attention enhancement mechanism in the feature extraction module, the feature extraction sequentially on the multiple frames of second scene image, in such a manner that the model can focus more on effective information.

The convolutional module comprises multiple convolutional layers. The convolutional module with the attention enhancement mechanism comprises an attention module arranged between at least one pair of adjacent convolutional layers. The attention module may be configured to calculate a channel weight and a spatial position weight based on input features, and then weigh the input features without changing shapes of the input features.

Optionally, as illustrated in FIG. 5, the attention module comprises a channel attention module, a first fusion layer, a spatial attention module, and a second fusion layer. An operation principle of each module layer comprises: obtaining, by the channel attention module, a channel weight based on a feature map outputted by a previous convolutional layer; obtaining a first fusion feature map by fusing, by the first fusion layer, the channel weight to the feature map outputted by the previous convolutional layer; obtaining, by the spatial attention module, a spatial position weight based on the first fusion feature map outputted by the first fusion layer; and obtaining a second fusion feature map by fusing, by the second fusion layer, the spatial position weight to the first fusion feature map, and inputting, by the second fusion layer, the second fusion feature map to a next convolutional layer.

A product operation is performed by both the first fusion layer and the second fusion layer. That is, a product operation is performed on the two pieces of input information.

At block 302, the multiple frames of feature maps are obtained by a temporal shift module in the second neural network model from the feature extraction module, and multiple frames of shifted feature maps are obtained by performing, using the temporal shift module in the second neural network model, a temporal shift on each of the multiple frames of feature maps.

Performing the temporal shift on each of the multiple frames of feature maps can effectively fuse temporal information between the multiple frames of feature maps without increasing computational effort, in such a manner that the shifted feature maps can obtain a temporal modeling ability.

In an optional specific embodiment, for each of frames of feature maps ranging from a first frame of feature map to a penultimate frame of feature map in the multiple frames of feature maps, features of part of channels in the feature map are shifted to corresponding channels of a successively subsequent frame of feature map to obtain the multiple frames of shifted feature maps.

To ensure that the multiple frames of shifted feature maps are consistent in size, a feature of a removed channel in the first frame of feature map may be set as 0.

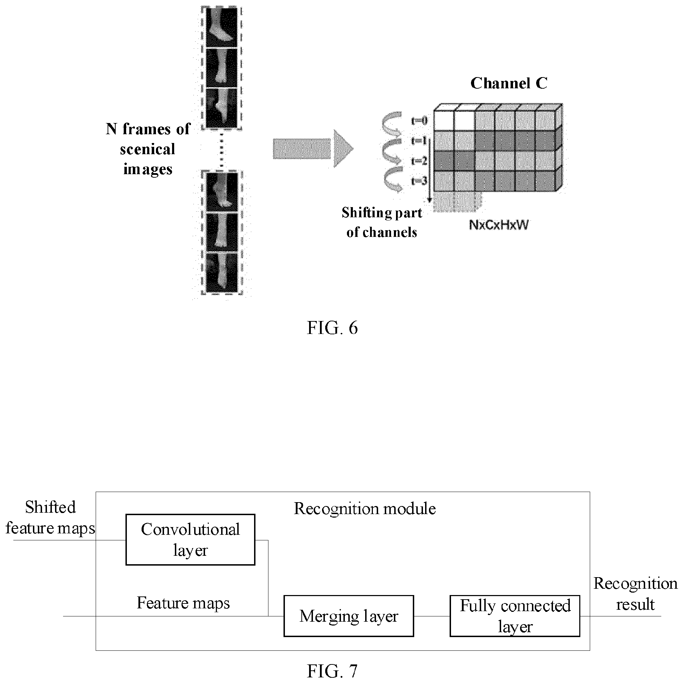

Based on a temporal shift principle illustrated in FIG. 6, a feature map of NxCxHxW is inputted (N represents a picture serial number, C represents a quantity of channels, H represents a height of a feature map, and W represents a width of the feature map). When N = 4, for a feature map of t = 4, features of part of channels in the feature map of t = 4 are discarded, and features of corresponding channels in a feature map of t = 3 are shifted to the feature map of t = 4. For the feature map of t = 3, features of part of channels in a feature map of t = 2 are shifted to the feature map of t = 3. For the feature map of t = 2, features of part of channels in a feature map of t = 1 are shifted to the feature map of t = 2. For the feature map of t = 1, features of part of channels in a feature map of t = 0 are shifted to the feature map of t = 1.

At block 303, the multiple frames of shifted feature maps are obtained by a recognition module in the second neural network model from the temporal shift module, the multiple frames of feature maps are obtained by the recognition module in the second neural network model from the feature extraction module, and the foot posture is recognized by the recognition module in the second neural network model based on the multiple frames of shifted feature maps and the multiple frames of feature maps.

In an optional specific embodiment, a recognition process of a structure of a recognition module illustrated in FIG. 7 comprises the following steps.

1. A convolution operation is performed by a convolutional layer in the recognition module on each of the multiple frames of shifted feature maps, to fuse a shifted previous temporal feature with a current temporal feature. It should be noted that to ensure subsequent merging between each of the multiple frames of shifted feature maps and the feature map outputted by the feature extraction module, the quantity of channels and the size of the feature map outputted subsequent to convolution should be guaranteed to remain unchanged during a convolutional operation.

2. Each of multiple frames of convolved feature maps is obtained by a merging layer in the recognition module from the convolutional layer. Multiple frames of merged feature maps are obtained by merging, by the merging layer in the recognition module, each of the multiple frames of convolved feature maps with a corresponding one of the multiple frames of feature maps outputted by the feature extraction module. Since temporal modeling information across frames is contained in the convolved feature map and spatial modeling information is retained by the feature extraction module, merging the convolved feature map with the feature map outputted by the feature extraction module allows the merged feature map to have both temporal modeling information and spatial modeling information. Specifically, a merge operation performed on the merging layer is a feature addition operation.

3. The multiple frames of merged feature maps are obtained by a fully connected layer in the recognition module from the merging layer, and a foot posture recognition result is obtained by the fully connected layer in the recognition module based on the multiple frames of merged feature maps.

The foot posture recognition result outputted by the fully connected layer may be a serial number of a valid foot posture or a serial number of an invalid foot posture.

The valid foot posture refers to a foot posture that can be recognized by the recognition module. The invalid foot posture refers to a foot posture that cannot be recognized by the recognition module.

Therefore, a recognition process illustrated in FIG. 3 is completed. By adding the temporal shift module to the model, each frame of feature map has a temporal modeling capability, which improves a video understanding capability. Therefore, specific foot postures can be accurately recognized.

Third Embodiment

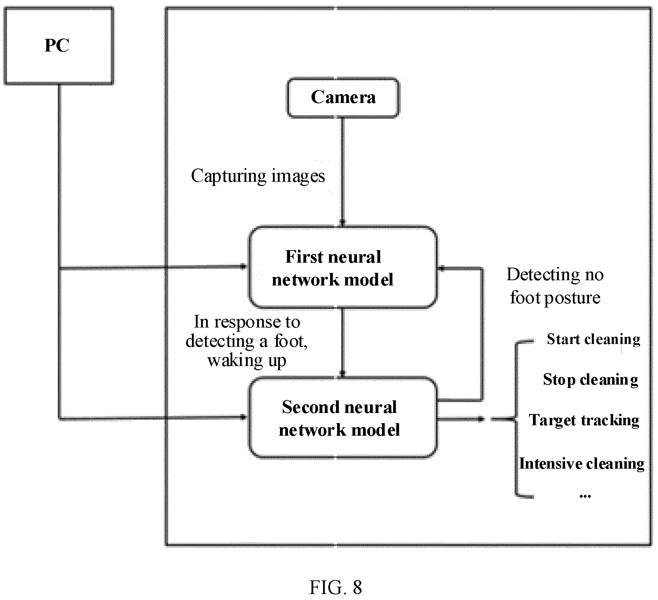

FIG. 8 is a specific flowchart illustrating a robot control method according to an exemplary embodiment of the present disclosure. Based on the above-mentioned embodiments illustrated in FIG. 2 to FIG. 7, the specific flowchart comprises the following contents. After the first neural network model and the second neural network model are trained on a PC, the first neural network model and the second neural network model are deployed to the robot. The scene image is captured by the camera mounted at the robot in real time, and inputted into the first neural network model for the first neural network model to detect whether the input scene image comprises the foot. When the foot is detected in the multiple consecutive frames of scene image, the second neural network model is woken up, and the video captured by the camera is inputted into the second neural network model for the second neural network model to recognize the foot posture in the input video. Therefore, the robot is controlled based on the control manner corresponding to the recognized foot posture (for example, functions such as controlling the robot to start cleaning, stop cleaning, perform target tracking, and perform intensive cleaning).

Further, when no valid foot posture is recognized by the second neural network model for a sustained period of time, the second neural network model is controlled to re-access the dormant state, and the first neural network model is activated to continue a foot detection.

According to the embodiments of the present disclosure, a robot control apparatus corresponding to the robot control method according to the above-mentioned embodiments is further provided to execute the robot control method described above.

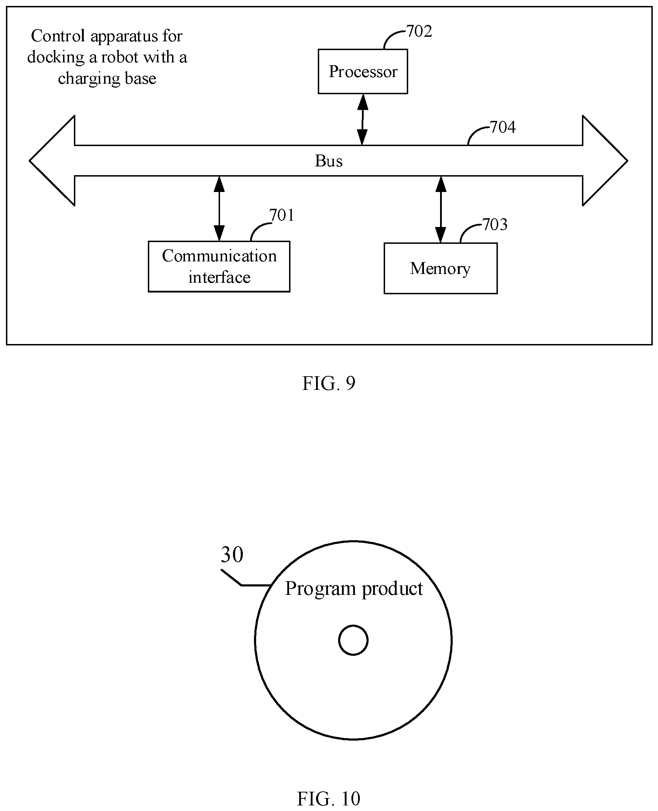

FIG. 9 is a schematic structural diagram of a robot control apparatus according to an exemplary embodiment of the present disclosure. The robot control apparatus comprises a communication interface 701, a processor 702, a memory 703, and a bus 704. The communication interface 701, the processor 702, and the memory 703 are in communication with each other via the bus 704. The processor 702 is capable of performing the above robot control method through reading and executing machine-executable instructions in the memory 703 and corresponding to control logic of the robot control method. Details of the method can be found in the above-mentioned embodiments and thus will not be repeated herein.

The memory 703 referred to in the present disclosure may be any electronic, magnetic, optical, or other physical storage devices, and may contain storage information such as executable instructions or data. Specifically, the memory 703 may be a Random Access Memory (RAM), a flash memory, a storage drive (e.g., a hard disk drive), any type of storage disk (e.g., an optical disc, a Digital Versatile Disc (DVD), etc.), or a similar storage medium, or a combination thereof. A communication connection between one system network element and at least one other network element is realized by at least one communication interface 701 (which may be a wired or wireless communication interface), using networks such as the Internet, Wide Area Network (WAN), Local Area Network (LAN), and Metropolitan Area Network (MAN).

The bus 704 may be an Industry Standard Architecture (ISA) bus, a Peripheral Component Interconnect (PCI) bus, an Extended Industry Standard Architecture (EISA) bus, etc. The bus may be classified into an address bus, a data bus, a control bus, etc. The memory 703 is configured to store a program. The processor 702 is configured to execute the program subsequent to a reception of an execution instruction.

The processor 702 may be an integrated circuit chip having signal processing capabilities. In an implementation, actions of the above method may be accomplished by an integrated logic circuit in hardware in the processor 702 or by instructions in the form of software. The above processor 702 may be a general-purpose processor, comprising a Central Processing Unit (CPU), a Network Processor (NP), etc.; and may further be a Digital Signal Processor (DSP), an Application Specific Integrated Circuit (ASIC), a Field-Programmable Gate Array (FPGA) or other programmable logic devices, a discrete gate or a transistor logic device, and a discrete hardware component. The method, actions, and logic block diagrams according to any of the embodiments of the present disclosure may be implemented or performed. The general-purpose processor may be a microprocessor, or the processor may further be any conventional processor, etc. The actions of the method disclosed in combination with any of the embodiments of the present disclosure may be directly embodied as performed by a hardware decoding processor or performed by a combination of a hardware module and a software module in a decoding processor.

The robot control apparatus according to the embodiments of the present disclosure is of the same invention concept as the robot control method according to the embodiments of the present disclosure and therefore provides the same advantageous effect as the robot control method adopted, performed, or implemented by the robot control apparatus.

According to the embodiment of the present disclosure, a computer-readable storage medium corresponding to the robot control method according to any of the above-mentioned embodiments is further provided. As illustrated in FIG. 10, the computer-readable storage medium is an optical disc 30. The optical disc 30 has a computer program (i.e., a program product) stored thereon. The computer program, when executed by the processor, performs the robot control method according to any of the above-mentioned embodiments.

It should be noted that examples of the computer-readable storage medium may also comprise, but are not limited to, a Phase-Change Memory (PRAM), a Static RAM (SRAM), a Dynamic RAM (DRAM), other types of RAMs, a Read-Only Memory (ROM), an Electrically Erasable Programmable Read-Only Memory (EEPROM), a flash memory or other optical or magnetic storage media. Details thereof will be omitted here.

The computer-readable storage medium according to the embodiments of the present disclosure is of the same invention concept as the robot control method according to the embodiments of the present disclosure and therefore provides the same advantageous effect as the robot control method adopted, performed, or implemented by an application stored on the computer-readable storage medium.

Other embodiments of the present disclosure are apparent to those skilled in the art upon consideration of the specification and from practicing of the disclosure disclosed here. The present disclosure is intended to encompass any variations, uses, or adaptations of the present disclosure, which follow the general principles of the present disclosure and comprise common knowledge or conventional technical means in the art that are not disclosed here. The description and embodiments are to be considered exemplary only, and the real scope and the essence of the present disclosure are defined by the claims as attached.

**Claims**

1. A robot control method, comprising:

   (S201) obtaining a first scene image captured by a camera (30) of a robot, and detecting whether the first scene image comprises a foot by a trained first neural network model;
   (S202) obtaining a plurality of frames of a second scene image captured by the camera (30) consecutively in response to detecting the foot in a predetermined quantity of consecutive frames of first scene image; and

(S203) recognizing a foot posture based on the plurality of frames of the second scene image, and controlling the robot based on a control manner corresponding to the recognized foot posture;

wherein the recognizing the foot posture based on the plurality of frames of the second scene image comprises:

inputting the plurality of frames of the second scene image that are obtained consecutively into a trained second neural network model, and recognizing the foot posture by the second neural network model based on the plurality of frames of the second scene image;

wherein a training process of the second neural network model comprises:

obtaining a plurality of video segments each containing the foot that are captured by the camera (30), and labeling a predetermined foot posture contained in each of the plurality of video segments; and obtaining the second neural network model by training a pre-established action recognition model using a plurality of labeled video segments;

wherein the recognizing the foot posture by the second neural network model based on the plurality of frames of the second scene image, is **characterized by** comprising:

(S301) obtaining a plurality of frames of feature maps by performing, using a feature extraction module in the second neural network model, a feature extraction sequentially on the plurality of frames of the second scene image;

(S302) obtaining, by a temporal shift module in the second neural network model, the plurality of frames of the feature maps from the feature extraction module, and obtaining a plurality of frames of shifted feature maps by performing, using the temporal shift module in the second neural network model, a temporal shift on each of the plurality of frames of the feature maps; and

(S303) obtaining, by a recognition module in the second neural network model, the plurality of frames of the shifted feature maps from the temporal shift module and the plurality of frames of the feature maps from the feature extraction module, and recognizing, by the recognition module in the second neural network model, the foot posture based on the plurality of frames of the shifted feature maps and the plurality of frames of the feature maps.

2. The method according to claim 1, wherein the detecting whether the first scene image comprises the foot by the trained first neural network model comprises: inputting the first scene image into the trained first neural network model, the first neural network model being configured to detect whether the first scene image comprises the foot, and output a detection result.

3. The method according to claim 2, further comprising a training process of the first neural network model, the training process comprising:

obtaining an image captured by the camera (30) and containing the foot as a positive sample; obtaining an image captured by the camera (30) and without the foot as a negative sample; and

obtaining the first neural network model by training a pre-established classification model using the positive sample and the negative sample.

4. The method according to claim 1, wherein the (S303) obtaining the plurality of frames of the shifted feature maps by performing, using the temporal shift module in the second neural network model, the temporal shift on each of the plurality of frames of the feature maps comprises: for each of the frames of the feature maps ranging from a first frame of feature map to a penultimate frame of feature map in the plurality of frames of the feature maps, shifting features of part of channels in the feature map to corresponding channels of a successively subsequent frame of feature map to obtain the plurality of frames of the shifted feature maps.

5. The method according to claim 1, wherein the (S303) recognizing, by the recognition module in the second neural network model, the foot posture based on the plurality of frames of the shifted feature maps and the plurality of frames of the feature maps comprises:

performing, by a convolutional layer in the recognition module, a convolution operation on each of the plurality of frames of the shifted feature maps; obtaining, by a merging layer in the recognition module, each of a plurality of frames of convolved the feature maps from the convolutional layer, and obtaining a plurality of frames of merged feature maps by merging, by the merging layer in the recognition module, each of the plurality of frames of convolved the feature maps with a corresponding one of the plurality of frames of the feature maps; and

obtaining, by a fully connected layer in the recognition module, the plurality of frames of the merged feature maps from the merging layer, and obtaining, by the fully connected layer in the recognition module, a foot posture recognition result based on the plurality of frames of the merged feature maps.

6. The method according to claim 1, wherein the (S301) obtaining the plurality of frames of the feature maps by performing, using the feature extraction module in the second neural network model, the feature extraction sequentially on the plurality of frames of second scene image comprises:

obtaining the plurality of frames of the feature maps by performing, using a convolutional module with an attention enhancement mechanism in the feature extraction module, the feature extraction sequentially on the plurality of frames of second scene image.

7. The method according to claim 6, wherein the convolutional module with the attention enhancement mechanism comprises an attention module arranged between at least one pair of adjacent convolutional layers, the attention module comprising a channel attention module, a first fusion layer, a spatial attention module, and a second fusion layer; and the method further comprises:

obtaining, by the channel attention module, a channel weight based on a feature map outputted by a previous convolutional layer;

obtaining a first fusion feature map by fusing, by the first fusion layer, the channel weight to the feature map outputted by the previous convolutional layer;

obtaining, by the spatial attention module, a spatial position weight based on the first fusion feature map outputted by the first fusion layer; and

obtaining a second fusion feature map by fusing, by the second fusion layer, the spatial position weight to the first fusion feature map, and inputting, by the second fusion layer, the second fusion feature map to a next convolutional layer.

8. The method according to claim 1, subsequent to the obtaining the second neural network model, the method further comprises:

performing an integer quantization on at least one model parameter of the second neural network model.

9. The method according to claim 1, wherein the (S203) controlling the robot based on the control manner corresponding to the recognized foot posture comprises:

controlling, based on the recognized foot posture being a first predetermined posture, the robot to initiate a cleaning mode to start cleaning;

controlling, based on the recognized foot posture being a second predetermined posture, the robot to stop cleaning;

controlling, based on the recognized foot posture being a third predetermined posture, the robot to access a target-tracking mode; and

controlling, based on the recognized foot posture being a fourth predetermined posture, the robot to perform cleaning in a predetermined range around a position of the foot.

10. A robot control apparatus (20), comprising:

a memory (703);
a processor (702); and
a computer program stored on the memory (703) and executable on the processor (702), wherein the processor (702) is configured to implement, when executing the computer program, steps of a method according to any one of claims 1 to 9.

11. A robot, comprising:

a robot control apparatus (20) according to claim 10; and
a camera (30) capturing a scene image of the robot.

12. A computer-readable storage medium having a computer program stored thereon, wherein the program, when executed by a processor (702), implements steps of a method according to any one of claims 1 to 9.

**Patentansprüche**

1. Robotersteuerungsverfahren, umfassend:

(S201) Erfassen eines ersten Szenenbildes, das von einer Kamera (30) eines Roboters aufgenommen wurde, und Erkennen, ob das erste Szenenbild einen Fuß umfasst, durch ein trainiertes erstes neuronales Netzwerkmodell;
(S202) Erfassen einer Mehrzahl von Einzelbildern eines zweiten Szenenbildes, das von der Kamera (30) fortlaufend aufgenommen wurde, als Reaktion darauf, dass der Fuß in einer vorbestimmten Anzahl fortlaufender Einzelbilder des ersten Szenenbildes erkannt wurde; und
(S203) Erkennen einer Fußhaltung auf der Grundlage der Mehrzahl von Einzelbildern des zweiten Szenenbildes und Steuern des Roboters auf der Grundlage einer Steuerungsart, die der erkannten Fußhaltung entspricht;
wobei das Erkennen der Fußhaltung auf der Grundlage der Mehrzahl von Einzelbildern des zweiten Szenenbildes umfasst:

Eingeben der Mehrzahl von Einzelbildern des zweiten Szenenbildes, die fortlaufend erfasst werden, in ein trainiertes zweites neuronales Netzwerkmodell, und Erkennen der Fußhaltung durch das zweite neuronale Netzwerkmodell auf der Grundlage der Mehrzahl von Einzelbildern des zweiten Szenenbildes;
wobei ein Trainingsprozess des zweiten neuronalen Netzwerkmodells umfasst:

Erfassen einer Mehrzahl von Videosegmenten, die jeweils den Fuß enthalten und von der Kamera (30) aufgenommen werden, und Kennzeichnen einer vorbestimmten Fußhaltung, die in jedem der Mehrzahl von Videosegmenten enthalten ist; und Erhalten des zweiten neuronalen Netzwerkmodells durch Trainieren eines vorab eingerichteten Aktionserkennungsmodells unter Verwendung einer Mehrzahl gekennzeichneter Videosegmente;
wobei das Erkennen der Fußhaltung durch das zweite neuronale Netzwerkmodell auf der Grundlage der Mehrzahl von Einzelbildern des zweiten Szenenbildes **dadurch gekennzeichnet ist, dass** es umfasst:

(S301) Erhalten einer Mehrzahl von Einzelbildern von Merkmalskarten durch Durchführen, unter Verwendung eines Merkmalsextraktionsmoduls in dem zweiten neuronalen Netzwerkmodell, einer Merkmalsextraktion nacheinander an der Mehrzahl von Einzelbildern des zweiten Szenenbildes;
(S302) Erhalten, durch ein Modul zur zeitlichen Verschiebung in dem zweiten neuronalen Netzwerkmodell, der Mehrzahl von Einzelbildern der Merkmalskarten von dem Merkmalsextraktionsmodul, und Erhalten einer Mehrzahl von Einzelbildern verschobener Merkmalskarten durch Durchführen, unter Verwendung des Moduls zur zeitlichen Verschiebung in dem zweiten neuronalen Netzwerkmodell, einer zeitlichen Verschiebung an jedem der Mehrzahl von Einzelbildern der Merkmalskarten; und
(S303) Erhalten, durch ein Erkennungsmodul in dem zweiten neuronalen Netzwerkmodell, der Mehrzahl von Einzelbildern der verschobenen Merkmalskarten von dem Modul zur zeitlichen Verschiebung und der Mehrzahl von Einzelbildern der Merkmalskarten von dem Merkmalsextraktionsmodul, und Erkennen, durch das Erkennungsmodul in dem zweiten neuronalen Netzwerkmodell, der Fußhaltung auf der Grundlage der Mehrzahl von Einzelbildern der verschobenen Merkmalskarten und der Mehrzahl von Einzelbildern der Merkmalskarten.

2. Verfahren nach Anspruch 1, wobei das Erkennen, ob das erste Szenenbild den Fuß umfasst, durch das trainierte erste neuronale Netzwerkmodell umfasst: Eingeben des ersten Szenenbildes in das trainierte erste neuronale Netzwerkmodell, wobei das erste neuronale Netzwerkmodell dazu konfiguriert ist, zu erkennen, ob das erste Szenenbild den Fuß umfasst, und ein Erkennungsergebnis auszugeben.

3. Verfahren nach Anspruch 2, ferner umfassend einen Trainingsprozess des ersten neuronalen Netzwerkmodells, wobei der Trainingsprozess umfasst:

Erfassen eines Bildes, das von der Kamera (30) aufgenommen wurde und den Fuß enthält, als Positivprobe;
Erfassen eines Bildes, das von der Kamera (30) aufgenommen wurde und ohne den Fuß ist, als Negativprobe; und
Erhalten des ersten neuronalen Netzwerkmodells durch Trainieren eines vorab eingerichteten Klassifikationsmodells unter Verwendung der Positivprobe und der Negativprobe.

4. Verfahren nach Anspruch 1, wobei das (S303) Erhalten der Mehrzahl von Einzelbildern der verschobenen Merkmalskarten durch Durchführen, unter Verwendung des Moduls zur zeitlichen Verschiebung in dem zweiten neuronalen Netzwerkmodell, der zeitlichen Verschiebung an jedem der Mehrzahl von Einzelbildern der Merkmalskarten umfasst:

für jedes der Einzelbilder der Merkmalskarten, das von einem ersten Einzelbild einer Merkmalskarte bis zu einem vorletzten Einzelbild einer Merkmalskarte in der Mehrzahl von Einzelbildern der Merkmalskarten reicht, Verschieben von Merkmalen eines Teils von Kanälen in der Merkmalskarte zu entsprechenden Kanälen eines unmittelbar nachfolgenden Einzelbildes einer Merkmalskarte, um die Mehrzahl von Einzelbildern der verschobenen Merkmalskarten zu erhalten.

5. Verfahren nach Anspruch 1, wobei das (S303) Erkennen, durch das Erkennungsmodul in dem zweiten neuronalen Netzwerkmodell, der Fußhaltung auf der Grundlage der Mehrzahl von Einzelbildern der verschobenen Merkmalskarten und der Mehrzahl von Einzelbildern der Merkmalskarten umfasst:

Durchführen, durch eine Faltungsschicht in dem Erkennungsmodul, einer Faltungsoperation an jedem der Mehrzahl von Einzelbildern der verschobenen Merkmalskarten;
Erhalten, durch eine Zusammenführungsschicht in dem Erkennungsmodul, jedes einer Mehrzahl von Einzelbildern der gefalteten Merkmalskarten von der Faltungsschicht, und Erhalten einer Mehrzahl von Einzelbildern zusammengeführter Merkmalskarten durch Zusammenführen, durch die Zusammenführungsschicht in dem Erkennungsmodul, jedes der Mehrzahl von Einzelbildern der gefalteten Merkmalskarten mit einem entsprechenden der Mehrzahl von Einzelbildern der Merkmalskarten; und
Erhalten, durch eine vollständig verbundene Schicht in dem Erkennungsmodul, der Mehrzahl von Einzelbildern der zusammengeführten Merkmalskarten von der Zusammenführungsschicht, und Erhalten, durch die vollständig verbundene Schicht in dem Erkennungsmodul, eines Fußhaltungserkennungsergebnisses auf der Grundlage der Mehrzahl von Einzelbildern der zusammengeführten Merkmalskarten.

6. Verfahren nach Anspruch 1, wobei das (S301) Erhalten der Mehrzahl von Einzelbildern der Merkmalskarten durch Durchführen, unter Verwendung des Merkmalsextraktionsmoduls in dem zweiten neuronalen Netzwerkmodell, der Merkmalsextraktion nacheinander an der Mehrzahl von Einzelbildern des zweiten Szenenbildes umfasst:
Erhalten der Mehrzahl von Einzelbildern der Merkmalskarten durch Durchführen, unter Verwendung eines Faltungsmoduls mit einem Aufmerksamkeitsverstärkungsmechanismus in dem Merkmalsextraktionsmodul, der Merkmalsextraktion nacheinander an der Mehrzahl von Einzelbildern des zweiten Szenenbildes.

7. Verfahren nach Anspruch 6, wobei das Faltungsmodul mit dem Aufmerksamkeitsverstärkungsmechanismus ein Aufmerksamkeitsmodul umfasst, das zwischen mindestens einem Paar benachbarter Faltungsschichten angeordnet ist, wobei das Aufmerksamkeitsmodul ein Kanalaufmerksamkeitsmodul, eine erste Fusionsschicht, ein räumliches Aufmerksamkeitsmodul und eine zweite Fusionsschicht umfasst; und
das Verfahren ferner umfasst:

Erhalten, durch das Kanalaufmerksamkeitsmodul, eines Kanalgewichts auf der Grundlage einer Merkmalskarte, die von einer vorherigen Faltungsschicht ausgegeben wird;
Erhalten einer ersten Fusionsmerkmalskarte durch Fusionieren, durch die erste Fusionsschicht, des Kanalgewichts mit der Merkmalskarte, die von der vorherigen Faltungsschicht ausgegeben wird;
Erhalten, durch das räumliche Aufmerksamkeitsmodul, eines räumlichen Positionsgewichts auf der Grundlage der ersten Fusionsmerkmalskarte, die von der ersten Fusionsschicht ausgegeben wird; und
Erhalten einer zweiten Fusionsmerkmalskarte durch Fusionieren, durch die zweite Fusionsschicht, des räumlichen Positionsgewichts mit der ersten Fusionsmerkmalskarte, und Eingeben, durch die zweite Fusionsschicht, der zweiten Fusionsmerkmalskarte in eine nächste Faltungsschicht.

8. Verfahren nach Anspruch 1, nach dem Erhalten des zweiten neuronalen Netzwerkmodells, wobei das Verfahren ferner umfasst:
Durchführen einer Ganzzahlquantisierung an mindestens einem Modellparameter des zweiten neuronalen Netzwerkmodells.

9. Verfahren nach Anspruch 1, wobei das (S203) Steuern des Roboters auf der Grundlage der Steuerungsart, die der erkannten Fußhaltung entspricht, umfasst:

Steuern, auf der Grundlage dessen, dass die erkannte Fußhaltung eine erste vorbestimmte Haltung ist, des Roboters, um einen Reinigungsmodus einzuleiten, um mit der Reinigung zu beginnen;
Steuern, auf der Grundlage dessen, dass die erkannte Fußhaltung eine zweite vorbestimmte Haltung ist, des Roboters, die Reinigung zu stoppen;
Steuern, auf der Grundlage dessen, dass die erkannte Fußhaltung eine dritte vorbestimmte Haltung ist, des Roboters, auf einen Zielverfolgungsmodus zuzugreifen; und

Steuern, auf der Grundlage dessen, dass die erkannte Fußhaltung eine vierte vorbestimmte Haltung ist, des Roboters, eine Reinigung in einem vorbestimmten Bereich um eine Position des Fußes herum durchzuführen.

10. Robotersteuerungsvorrichtung (20), umfassend:

einen Speicher (703);
einen Prozessor (702); und
ein Computerprogramm, das in dem Speicher (703) gespeichert und auf dem Prozessor (702) ausführbar ist, wobei der Prozessor (702) dazu konfiguriert ist, beim Ausführen des Computerprogramms Schritte eines Verfahrens nach einem der Ansprüche 1 bis 9 zu implementieren.

11. Roboter, umfassend:
eine Robotersteuerungsvorrichtung (20) nach Anspruch 10; und eine Kamera (30), die ein Szenenbild des Roboters aufnimmt.

12. Computerlesbares Speichermedium, auf dem ein Computerprogramm gespeichert ist, wobei das Programm, wenn es von einem Prozessor (702) ausgeführt wird, Schritte eines Verfahrens nach einem der Ansprüche 1 bis 9 implementiert.

**Revendications**

1. Procédé de commande de robot, comprenant :

(S201) l'obtention d'une première image de scène capturée par une caméra (30) d'un robot, et la détection du fait que la première image de scène comprend ou non un pied par un premier modèle de réseau neuronal entraîné ;
(S202) l'obtention d'une pluralité de trames d'une seconde image de scène capturée consécutivement par la caméra (30) en réponse à la détection du pied dans une quantité prédéterminée de trames consécutives de la première image de scène ; et
(S203) la reconnaissance d'une posture de pied sur la base de la pluralité de trames de la seconde image de scène, et la commande du robot sur la base d'un mode de commande correspondant à la posture de pied reconnue ;
dans lequel la reconnaissance de la posture de pied sur la base de la pluralité de trames de la seconde image de scène comprend :

l'entrée de la pluralité de trames de la seconde image de scène qui sont obtenues consécutivement dans un second modèle de réseau neuronal entraîné, et la reconnaissance de la posture de pied par le second modèle de réseau neuronal sur la base de la pluralité de trames de la seconde image de scène ;
dans lequel un processus d'entraînement du second modèle de réseau neuronal comprend :

l'obtention d'une pluralité de segments vidéo contenant chacun le pied qui sont capturés par la caméra (30), et l'étiquetage d'une posture de pied prédéterminée contenue dans chacun de la pluralité de segments vidéo ; et l'obtention du second modèle de réseau neuronal par entraînement d'un modèle de reconnaissance d'action préétabli en utilisant une pluralité de segments vidéo étiquetés ;
dans lequel la reconnaissance de la posture de pied par le second modèle de réseau neuronal sur la base de la pluralité de trames de la seconde image de scène est **caractérisée en ce qu'**elle comprend :

(S301) l'obtention d'une pluralité de trames de cartes de caractéristiques en effectuant, au moyen d'un module d'extraction de caractéristiques dans le second modèle de réseau neuronal, une extraction de caractéristiques séquentiellement sur la pluralité de trames de la seconde image de scène ;
(S302) l'obtention, par un module de décalage temporel dans le second modèle de réseau neuronal, de la pluralité de trames des cartes de caractéristiques depuis le module d'extraction de caractéristiques, et l'obtention d'une pluralité de trames de cartes de caractéristiques décalées en effectuant, au moyen du module de décalage temporel dans le second modèle de réseau neuronal, un décalage temporel sur chacune de la pluralité de trames des cartes de caractéristiques ; et
(S303) l'obtention, par un module de reconnaissance dans le second modèle de réseau neuronal, de la pluralité de trames des cartes de caractéristiques décalées depuis le module de décalage temporel et de la pluralité de trames des cartes de caractéristiques depuis le module d'extraction de caractéristiques, et la reconnaissance, par le module de reconnaissance dans le second modèle de réseau neuronal, de la posture de pied sur la base de la pluralité de trames des cartes de caractéristiques décalées et de la pluralité de trames des cartes de caractéristiques.

2. Procédé selon la revendication 1, dans lequel la détection du fait que la première image de scène comprend ou non le pied par le premier modèle de réseau neuronal entraîné comprend : l'entrée de la première image de scène dans le premier modèle de réseau neuronal entraîné, le premier modèle de réseau neuronal étant configuré pour détecter si la première image de scène comprend le pied, et pour produire en sortie un résultat de détection.

3. Procédé selon la revendication 2, comprenant en outre un processus d'entraînement du premier modèle de réseau neuronal, le processus d'entraînement comprenant :

l'obtention d'une image capturée par la caméra (30) et contenant le pied en tant qu'échantillon positif ;
l'obtention d'une image capturée par la caméra (30) et dépourvue du pied en tant qu'échantillon négatif ; et
l'obtention du premier modèle de réseau neuronal par entraînement d'un modèle de classification préétabli en utilisant l'échantillon positif et l'échantillon négatif.

4. Procédé selon la revendication 1, dans lequel l'étape (S303) d'obtention de la pluralité de trames des cartes de caractéristiques décalées en effectuant, au moyen du module de décalage temporel dans le second modèle de réseau neuronal, le décalage temporel sur chacune de la pluralité de trames des cartes de caractéristiques comprend :
pour chacune des trames des cartes de caractéristiques allant d'une première trame de carte de caractéristiques à une avant-dernière trame de carte de caractéristiques dans la pluralité de trames des cartes de caractéristiques, le décalage de caractéristiques d'une partie de canaux dans la carte de caractéristiques vers des canaux correspondants d'une trame de carte de caractéristiques immédiatement suivante afin d'obtenir la pluralité de trames des cartes de caractéristiques décalées.

5. Procédé selon la revendication 1, dans lequel l'étape (S303) de reconnaissance, par le module de reconnaissance dans le second modèle de réseau neuronal, de la posture de pied sur la base de la pluralité de trames des cartes de caractéristiques décalées et de la pluralité de trames des cartes de caractéristiques comprend :

l'exécution, par une couche convolutive dans le module de reconnaissance, d'une opération de convolution sur chacune de la pluralité de trames des cartes de caractéristiques décalées ;
l'obtention, par une couche de fusion dans le module de reconnaissance, de chacune d'une pluralité de trames des cartes de caractéristiques convoluées depuis la couche convolutive, et l'obtention d'une pluralité de trames de cartes de caractéristiques fusionnées par fusion, par la couche de fusion dans le module de reconnaissance, de chacune de la pluralité de trames des cartes de caractéristiques convoluées avec une trame correspondante de la pluralité de trames des cartes de caractéristiques ; et
l'obtention, par une couche entièrement connectée dans le module de reconnaissance, de la pluralité de trames des cartes de caractéristiques fusionnées depuis la couche de fusion, et l'obtention, par la couche entièrement connectée dans le module de reconnaissance, d'un résultat de reconnaissance de posture de pied sur la base de la pluralité de trames des cartes de caractéristiques fusionnées.

6. Procédé selon la revendication 1, dans lequel l'étape (S301) d'obtention de la pluralité de trames des cartes de caractéristiques en effectuant, au moyen du module d'extraction de caractéristiques dans le second modèle de réseau neuronal, l'extraction de caractéristiques séquentiellement sur la pluralité de trames de la seconde image de scène comprend : l'obtention de la pluralité de trames des cartes de caractéristiques en effectuant, au moyen d'un module convolutif doté d'un mécanisme de renforcement de l'attention dans le module d'extraction de caractéristiques, l'extraction de caractéristiques séquentiellement sur la pluralité de trames de la seconde image de scène.

7. Procédé selon la revendication 6, dans lequel le module convolutif doté du mécanisme de renforcement de l'attention comprend un module d'attention agencé entre au moins une paire de couches convolutives adjacentes, le module d'attention comprenant un module d'attention de canal, une première couche de fusion, un module d'attention spatiale et une seconde couche de fusion ; et
le procédé comprend en outre :

l'obtention, par le module d'attention de canal, d'un poids de canal sur la base d'une carte de caractéristiques sortie par une couche convolutive précédente ;

l'obtention d'une première carte de caractéristiques de fusion par fusion, par la première couche de fusion, du poids de canal avec la carte de caractéristiques sortie par la couche convolutive précédente ;

l'obtention, par le module d'attention spatiale, d'un poids de position spatiale sur la base de la première carte de caractéristiques de fusion sortie par la première couche de fusion ; et

l'obtention d'une seconde carte de caractéristiques de fusion par fusion, par la seconde couche de fusion, du poids de position spatiale avec la première carte de caractéristiques de fusion, et l'entrée, par la seconde couche de fusion, de la seconde carte de caractéristiques de fusion dans une couche convolutive suivante.

8. Procédé selon la revendication 1, à la suite de l'obtention du second modèle de réseau neuronal, le procédé comprenant en outre :
l'exécution d'une quantification entière sur au moins un paramètre de modèle du second modèle de réseau neuronal.

9. Procédé selon la revendication 1, dans lequel l'étape (S203) de commande du robot sur la base du mode de commande correspondant à la posture de pied reconnue comprend :

la commande, sur la base du fait que la posture de pied reconnue est une première posture prédéterminée, du robot pour lancer un mode de nettoyage afin de démarrer le nettoyage ;

la commande, sur la base du fait que la posture de pied reconnue est une deuxième posture prédéterminée, du robot pour arrêter le nettoyage ;

la commande, sur la base du fait que la posture de pied reconnue est une troisième posture prédéterminée, du robot pour accéder à un mode de suivi de cible ; et

la commande, sur la base du fait que la posture de pied reconnue est une quatrième posture prédéterminée, du robot pour effectuer un nettoyage dans une plage prédéterminée autour d'une position du pied.

10. Appareil de commande de robot (20), comprenant :

une mémoire (703) ;

un processeur (702) ; et

un programme informatique stocké dans la mémoire (703) et exécutable sur le processeur (702), dans lequel le processeur (702) est configuré pour mettre en œuvre, lors de l'exécution du programme informatique, les étapes d'un procédé selon l'une quelconque des revendications 1 à 9.

11. Robot, comprenant :
un appareil de commande de robot (20) selon la revendication 10 ; et une caméra (30) capturant une image de scène du robot.

12. Support de stockage lisible par ordinateur ayant un programme informatique stocké sur celui-ci, dans lequel le programme, lorsqu'il est exécuté par un processeur (702), met en œuvre les étapes d'un procédé selon l'une quelconque des revendications 1 à 9.

Robot body 10      Robot control apparatus 20

Camera 30

FIG. 1

201

A first scenical image captured by a camera of a robot is obtained, and whether the first scenical image includes a foot is detected

202

Multiple frames of second scenical images captured by the camera are obtained consecutively in response to detecting the foot in a predetermined quantity of consecutive frames of first scenical images

203

A foot posture is recognized based on the multiple frames of second scenical images, and the robot is controlled based on a control manner corresponding to the recognized foot posture

FIG. 2

301

Multiple frames of feature maps are obtained by performing, using a feature extraction module in the second neural network model, a feature extraction sequentially on the multiple frames of second scenical images

302

The multiple frames of feature maps are obtained by a temporal shift module in the second neural network model from the feature extraction module, and multiple frames of shifted feature maps are obtained by performing, using the temporal shift module in the second neural network model, a temporal shift on each of the multiple frames of feature maps

303

The multiple frames of shifted feature maps are obtained by a recognition module in the second neural network model from the temporal shift module, the multiple frames of feature maps are obtained by the recognition module in the second neural network model from the feature extraction module, and the foot posture is recognized by the recognition module in the second neural network model based on the multiple frames of shifted feature maps and the multiple frames of feature maps

FIG. 3

| Multiple frames of second scenical images | Second neural network model | | | Foot posture recognition result |
|---|---|---|---|---|
| | Feature extraction module | Temporal shift module | Recognition module | |

FIG. 4

FIG. 5

**Channel C**

N frames of
scenical
images

t=0
t=1
t=2
t=3

Shifting part
of channels

NxCxHxW

FIG. 6

Shifted
feature maps

Recognition module

Convolutional
layer

Feature maps

Merging layer

Fully connected
layer

Recognition
result

FIG. 7

PC

Camera

Capturing images

First neural
network model

In response to
detecting a foot,
waking up

Detecting no
foot posture

Second neural
network model

Start cleaning

Stop cleaning

Target tracking

Intensive cleaning

...

FIG. 8

Control apparatus for
docking a robot with a
charging base

─702

Processor

─704

Bus

─701

Communication
interface

─703

Memory

FIG. 9

30

Program product

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 112379781 A
- US 2018213994 A1
- WO 2021143543 A1

### Non-patent literature cited in the description

- ARShoe Real-Time Augmented Reality Shoe Try-on system on smartphones. **AN SHAN et al.** PROCEEDINGS OF THE 45TH INTERNATIONAL ACM SIGIR CONFERENCE ON RESEARCH AND DEVELOPMENT IN INFORMATION RETRIEVAL. ACMPUB27, 17 October 2021, 1111-1119